# EUROPÄISCHE PATENTSCHRIFT

(11) **EP 1 013 196 B1**
(45) Veröffentlichungstag und Bekanntmachung des Hinweises auf die Patenterteilung: **28.04.2004**
(21) Anmeldenummer: 99123211.7
(22) Anmeldetag: 25.11.1999
(51) Int. Cl.: A47B 91/00, A61M 5/14, F16M 11/42, F16M 11/28, A47B 13/02, A47C 7/00

(54) **Geräteständer**
Apparatus stand
Support pour appareils

(30) Priorität: 22.12.1998 DE 19859473
(43) Veröffentlichungstag der Anmeldung: 28.06.2000
(73) Patentinhaber: Innovation Technik Design ITD GmbH, 82008 Unterhaching (DE)
(72) Erfinder: Simon, Peter, 81377 München (DE)
(74) Vertreter: Müller-Boré & Partner Patentanwälte

(56) Entgegenhaltungen:
- GB-A- 2 123 687
- US-A- 3 078 063
- US-A- 4 117 784
- US-A- 4 448 378
- US-A- 4 728 067
- US-A- 4 789 122
- US-A- 4 821 986

## Beschreibung

Die Erfindung betrifft einen Geräteständer zur Aufnahme bzw. zum Tragen verschiedenster Einrichtungen bzw. Geräte, insbesondere medizinischer Geräte.

Medizinische Geräte, wie beispielsweise Ultraschallgeräte, werden meist auf beweglichen Ständern bzw. Wagen angeordnet, um sie leicht an den jeweiligen Einsatzort bewegen zu können. Eine Bauart dieser Ständer, welche insbesondere für kleinere Geräte verwendet wird, besteht aus einer senkrechten Säule, welche sich von einem Standfuß erstreckt, und an der Säule angebrachter Aufnahmeeinrichtungen zur Befestigung verschiedenster Geräte. Der Standfuß besteht meist aus mehreren Auslegern, welche sich im wesentlichen quer von der Säule wegerstrecken und an ihren freien Enden Füße oder Rollen aufweisen. Dabei wurde bislang häufig der gesamte Fuß als einstückiges Bauteil, beispielsweise als Druckgußteil ausgebildet. Dies hat den Nachteil, daß der Fuß nur schwer an verschiedene Einsatzzwecke anpaßbar ist. Es kann insbesondere erforderlich sein, den Geräteständer speziell an bestimmte Geräte und/oder Einsatzorte anzupassen, insbesondere da die Geräte unterschiedliche Größen und Gewichte aufweisen können. Daher ist es häufig erforderlich, speziell ausgestaltete Füße zu verwenden, welche speziell an die von dem Geräteständer zu tragenden Geräte angepaßt sind, um einen sicheren Stand des Geräteständers zu ermöglichen. Bei einstückig hergestellten Füßen ist es in diesen Fällen erforderlich, für jeden der verschiedenen Anwendungsfälle spezielle Füße herzustellen, was zu erhöhten Werkzeug- und Herstellungskosten führt.

Aus der DE-44 269 36 ist ein Möbelfußsystem für Mittelsäulentische, Zweisäulentische und andere Möbel mit Säulenstruktur bekannt. Diese Möbel weisen ebenfalls eine zentrale tragende Säule auf, an deren unteren Ende ein Verbindungsstück ausgebildet ist, welches an seinem Umfang eine Verzahnung aufweist, an welcher in verschiedenen Positionen Ausleger positioniert werden können. Nach der Positionierung der Ausleger an der Verzahnung werden diese mittels einer zentralen Verschraubung an der Säule befestigt. Durch die Verzahnung ist es möglich, je nach Bedarf eine unterschiedliche Anzahl von Auslegern an verschiedenen Positionen an dem Verbindungsstück anzuordnen. Diese Ausgestaltung weist jedoch die Nachteile auf, daß die an dem Verbindungsstück ausgebildete Verzahnung recht teuer herzustellen ist, in ihrer optischen Gestaltung wenig ansprechend ist und ferner viele Kanten aufweist, welche schlecht zu reinigen sind, was insbesondere im medizinischen Bereich von Nachteil ist. Ferner erfordert eine derartige Verzahnung bestimmte Mindestabstände zwischen den einzelnen Zähnen, so daß nur eine geringe Anzahl von Positionierungsmöglichkeiten für die Ausleger erreicht werden kann. Daher bietet dieses Möbelfußsystem nur eine eingeschränkte Variabilität für die Ausgestaltung des Standfußes. Schließlich ist auch die Montage der Ausleger an diesem Verbindungsstück recht aufwendig, da zunächst alle Ausleger in der Verzahnung ausgerichtet und positioniert werden müssen und dann solange fixiert gehalten werden müssen, bis die zentrale Verschraubung, welche sämtliche Ausleger sichert, angezogen ist.

Aus der US-A-4 448 378 ist ein Geräteständer bekannt, der eine Säule zum Tragen von Gegenständen und eine Basis aufweist, wobei die Basis aus einem Knotenstück besteht, an welchem mehrere Ausleger in Form von Standbeinen angeordnet werden können. Das Anordnen der Ausleger am Knotenstück erfolgt dabei über eine ringförmige Nut an den Auslegern und darin eingreifende Stifte bzw. Zapfen an dem Knotenstück. Nachteilig ist es bei diesem bekannten Geräteständer jedoch, daß die als Standfüße dienenden Ausleger nur an ganz bestimmten, vorgegebenen Positionen im Bereich des Knotenstückes bzw. der Säule angeordnet werden können.

Entsprechendes gilt für die US-A-4 728 067 und die GB-A-2 123 687, bei denen es ebenfalls nur möglich ist, die als Standfüße dienenden Ausleger an vorbestimmten Positionen der betreffenden Standfüße anzuordnen.

Die DE-A-33 45 533 offenbart ein Fundament zum Aufstellen von elektrischen Geräten oder Gerätebausteinen. Das Fundament besteht aus einer mehreckigen oder kreisförmigen Tragplatte und mehreren in annähernd gleichen Winkeln versetzten Auslegern, welche an der Tragplatte befestigt sind. Von der Tragplatte erstrecken sich an der Unterseite mehrere nach unten ragende Wandteile, wobei jedes Wandteil an seinem oberen und unteren Ende je einen Ausschnitt besitzt. Die Ausleger weisen Haken und Haltezungen auf, welche in die jeweiligen Ausschnitte der Wandteile eingreifen und auf diese Weise an der Tragplatte positioniert werden. Dabei ist die Tragplatte für jeden Ausleger exakt eine Befestigungsposition durch die entsprechend angeordneten Ausschnitte vorgegeben. Eine variable Anordnung von Auslegern und insbesondere eine Variation der Anzahl der Ausleger an ein und derselben Tragplatte ist daher nicht möglich.

Die DE-U-89 04 601 und die DE-U-80 03 875 offenbaren Fuß- bzw. Stativkreuze, welche einen Zentralkörper aufweisen, an dem einstückig eine der Anzahl von anzubringenden Auslegern entsprechende Anzahl von Anschlußstutzen ausgebildet ist. Die einzelnen Ausleger sind an jeweils einem der Anschlußstutzen befestigt. Auf diese Weise wird die Positionierung der Ausleger an dem Zentralkörper durch die Anordnung der Anschlußstutzen exakt vorgegeben. Eine Variation der Position der Ausleger an dem Zentralkörper ist nicht möglich. Ferner ist es ebenfalls nicht möglich, die Anzahl der Ausleger zu verändern, ohne einen entsprechend geänderten Zentralkörper mit einer entsprechenden Anzahl von Anschlußstutzen vorzusehen.

Es ist Aufgabe der vorliegenden Erfindung, einen Geräteständer gemäß dem Oberbegriff des Anspruchs 1 insoweit zu verbessern, daß es möglich ist, die Ausleger so an dem Knotenstück bzw. der Säule des Geräteständers anzuordnen, daß eine Anpassung der durch die Ausleger gebildeten Aufstandsfläche des Geräteständers an unterschiedlichste Schwerpunkte des Geräteständers vorgenommen werden kann.

Diese Aufgabe wird durch die im kennzeichnenden Teil des Anspruchs 1 angegebenen Merkmale gelöst. Vorteilhafte Ausführungsformen ergeben sich aus den Unteransprüchen.

Der Geräteständer weist als Standfuß eine Basis auf, welche als zentralen Bestandteil ein Knotenstück umfaßt. Das Knotenstück trägt vorteilhafterweise an seiner Oberseite die Säule, welche sich im wesentlichen vertikal von dem Knotenstück wegerstreckt. Die Säule ist ausgebildet zur Aufnahme bzw. zum Tragen verschiedener Einrichtungen oder Geräte. Ferner sind an dem Knotenstück mehrere Ausleger angeordnet, welche sich im wesentlichen quer zu der Säule, d.h. vorzugsweise horizontal von dem Knotenstück weg erstrecken.

Das Knotenstück ist vorteilhafterweise kreisförmig ausgebildet. An seinem Umfang sind in regelmäßigen Abständen Bohrungen angeordnet, an denen eine variable Zahl von Auslegern an verschiedenen Positionen positionierbar ist. Dabei werden die Ausleger so an das Knotenstück angesetzt, daß zumindest jeweils eines der Löcher, welche in den dem Knotenstück zugewandten Enden der Ausleger ausgebildet sind, mit einer gewünschten Bohrung der Vielzahl von Bohrungen in dem Knotenstück zur Deckung gebracht wird. Um den Ausleger dann in dieser gewünschten Position zu fixieren, wird ein Fixierungselement durch das Loch in dem Ausleger in die Bohrung in dem Knotenstück eingesetzt. Vorzugsweise handelt es sich bei dem Fixierungselement um eine Schraube, welche den Ausleger gleichzeitig an dem Knotenstück positioniert und befestigt. Da jeder Ausleger mittels zumindest einem zugehörigen Fixierungselement separat fixiert und befestigt wird, können die Ausleger einzeln angebracht und wieder gelöst werden. Daher vereinfacht sich die Montage, da nicht mehr sämtliche Ausleger vor der gemeinsamen Befestigung mit einer zentralen Schraube positioniert gehalten werden müssen.

Durch die Anordnung einer Vielzahl von Bohrungen an dem Umfang des Knotenstückes und mehrerer Bohrungen in den Enden der Auslegern, ergibt sich eine äußerst große Zahl vorgegebener Positionen, an denen Ausleger je nach Bedarf an dem Knotenstück befestigt werden können. Es können verschiedene Anzahlen von Auslegern, beispielsweise 4, 5 oder 6 Ausleger an dem Knotenstück befestigt werden, je nach Ausgestaltung der von dem Geräteständer zu tragenden Geräte. Ferner können insbesondere bei einer geringen Anzahl von Auslegern, beispielsweise bei 4 Auslegern, die Positionen, in denen die Ausleger angebracht werden, und somit die Richtungen, in denen sich die Ausleger von dem Knotenstück wegerstrecken, variiert werden, um die Basis des Geräteständers an Gewicht und Größe der von dem Geräteständer zu tragenden Geräte anzupassen. Dabei können die Ausleger vorteilhafterweise auch unterschiedlich lang ausgebildet werden, um eine große Standsicherheit und/oder bessere Zugänglichkeit der Geräte bei der Benutzung zu ermöglichen. Es ist durch unterschiedlich lange Ausleger möglich, die Basis asymmetrisch auszugestalten, d.h. die Säule erstreckt sich nicht von dem Mittelpunkt der Basis nach oben. So kann der gesamte Geräteständer derart ausgebildet werden, daß der Schwerpunkt der zu tragenden Geräte im wesentlichen über dem Mittelpunkt der Basis angeordnet ist, so daß eine große Standfestigkeit erreicht wird. Ferner können die Ausleger auch so lang ausgebildet und derart an dem Knotenstück angeordnet werden, daß sie sich über die äußeren Ecken der zu tragenden Geräte hinaus erstrecken, wodurch sichergestellt wird, daß im Falle einer Kollision, beispielsweise mit einer Wand zuerst die freien Enden der Ausleger anstoßen und nicht die von dem Geräteständer getragenen Geräte, wodurch eine mögliche Beschädigung der Geräte verhindert werden kann. An den dem Knotenstück abgewandten freien Enden der Ausleger sind Füße oder Rollen angebracht, je nachdem, ob es sich um einen festen oder einen beweglichen Ständer handelt. Ferner kann auch zumindest einer der Ausleger mit einem weiteren Knotenstück verbunden sein. Auf diese Weise kann ein Geräteständer gebildet werden, welcher beispielsweise zwei Knotenstücke mit zwei sich von diesen erstreckenden Säulen aufweist und auf diese Weise geeignet ist, auch größere Geräte zu tragen.

Die Löcher in den Auslegern sind jeweils in Gestalt einander teilweise überlappender Kreise ausgebildet, wobei jeweils zumindest einer der Kreise zu einer beliebigen Bohrung der Bohrungen in dem Knotenstück fluchtend positionierbar ist. Dies bedeutet, daß die einzelnen Löcher jeweils in Form von Langlöchern ausgebildet sind, welche sich ihrerseits wiederum aus mehreren einander überlappenden kreisförmigen Löchern zusammensetzen. Die einander gegenüberliegenden. Längsseiten der Langlöcher weisen somit jeweils mehrere nebeneinanderliegende Bögen auf. Auf diese Weise ist es möglich in den Langlöchern an verschiedenen Positionen Fixierungselemente, wie beispielsweise einen runden Bolzen oder eine Schraube zu positionieren. Zur Anbringung der Ausleger an dem Knotenstück erstrecken sich die Fixierungselemente durch die Löcher in den Auslegern in ausgewählte der Bohrungen an dem Knotenstück. Da die Fixierungselemente zusätzlich in den Löchern in den Auslegern an verschiedenen Positionen positioniert werden können, ergeben sich zusätzliche, äußerst fein abgestufte Variationsmöglichkeiten bei der Positionierung der Ausleger an dem Knotenstück, wodurch eine noch variablere Gestaltung der Basis des Geräteständers ermöglicht wird.

Insgesamt ist der erfindungsgemäße Geräteständer somit als äußerst variables Baukastensystem ausgebildet, das eine leichte Anpassung an eine Vielzahl möglicher Anwendungsfälle ermöglicht. Dennoch kann eine einfache Montage sichergestellt werden, da sämtliche Befestigungspositionen der Ausleger vorgegeben sind und vorteilhafterweise nur form- und kraftschlüssige Verbindungen der Einzelteile erforderlich sind, so daß auf aufwendige Schweißarbeiten gänzlich verzichtet werden kann.

Vorteilhafterweise sind die Bohrungen an der Unterseite des Knotenstückes angeordnet. Auf diese Weise sind die Bohrungen verdeckt angeordnet, so daß sie den optischen Eindruck des Knotenstückes und der Basis nicht stören, da auch die gerade nicht zur Befestigung eines Auslegers verwendeten Bohrungen aus dem normalen Blickwinkel eines Benutzers nicht zu sehen sind. Ferner sind auf diese Weise die Bohrungen auch vor Verschmutzung geschützt, so daß Schmutz nur schwer in sie eindringen kann, was insbesondere beim Einsatz im medizinischen Bereich von Vorteil ist.

Zweckmäßigerweise sind mehrere der in einem Ausleger ausgebildeten Löcher gleichzeitig zu Bohrungen in dem Knotenstück fluchtend positionierbar. Auf diese Weise wird es möglich jeden Ausleger mit mehreren Fixierungselementen, vorzugsweise Schrauben an dem Knotenstück zu befestigen, wodurch eine größere Festigkeit der Verbindung zwischen Ausleger und Knotenstück erreicht wird. Es kann somit eine äußerst stabile Basis des Geräteständers geschaffen werden.

Zweckmäßigerweise ist in Winkelschritten zwischen 2° und 15°, bevorzugt zwischen 4° und 8° und besonders bevorzugt in Winkelschritten von 6° entlang des Umfangs des Knotenstückes zumindest eines der Löcher zu einer der Bohrungen fluchtend positionierbar. Auf diese Weise sind die verschiedenen möglichen Befestigungspositionen für die Ausleger sehr fein abgestuft, so daß sich eine große Zahl von Ausgestaltungsvarianten und Anpassungsmöglichekeiten an verschiedenen Einsatzzwecke und -orte für die Basis ergibt.

Vorzugsweise treten die Ausleger mit dem Knotenstück formschlüssig in Eingriff, wenn die Löcher zu den Bohrungen fluchtend positioniert werden. Dies bedeutet, daß die Ausleger mit ihren entsprechenden Enden am Umfang des Knotenstückes bündig anliegen und/oder mit zusätzlichen Eingriffsmitteln mit dem Knotenstück formschlüssig verbunden sind. Auf diese Weise kann eine stabile Anbindung der Ausleger an dem Knotenstück erreicht werden, wodurch eine äußerst stabile Basis des Geräteständers geschaffen werden kann.

Die Ausleger weisen vorteilhafterweise jeweils an ihren dem Knotenstück zugewandten Ende zumindest einen Vorsprung zum Eingriff in eine korrespondierende Nut an dem Knotenstück und/oder zumindest eine Nut zum Umgreifen eines Teils des Knotenstückes auf. Auf diese Weise kann eine feste und stabile Verbindung zwischen den einzelnen Auslegern und dem Knotenstück erreicht werden. So kann beispielsweise das Knotenstück an der oberen Kante seines äußeren Umfanges einen Winkel aufweisen, der sich über den äußeren Umfang hinaus erstreckt und eine nach unten geöffnete Nut bildet. In diese Nut kann der Ausleger mit einem entsprechenden Vorsprung eingreifen, während gleichzeitig der Ausleger vorzugsweise mit einem Winkel die untere Umfangskante des Knotenstückes umgreift. Dieses zusätzliche Ineinandergreifen von Ausleger und Knotenstück ermöglicht eine sichere Übertragung von Biegemomenten von den Auslegern auf das Knotenstück.

Zweckmäßigerweise sind die dem Knotenstück zugewandten Enden der Ausleger als separate Verbindungsstücke ausgebildet, welche mit den Auslegern verbunden sind. Auf diese Weise ist es möglich, die Ausleger kostengünstig aus vorgefertigtem Stangenmaterial wie beispielsweise Rohren oder Strangpreßprofilen zu fertigen. Die spezielle Ausgestaltung zur Anbindung an das Knotenstück kann dann in dem Verbindungsstück ausgebildet werden, welches beispielsweise Druckgießen von Aluminium hergestellt wird. Das Verbindungsstück kann dann vorzugsweise durch Schrauben mit dem jeweiligen Ausleger verbunden werden.

Vorteilhafterweise sind die Ausleger hohl ausgebildet und die Verbindungsstücke sind jeweils von einer Stirnseite in den Ausleger eingeschoben und dort vorzugsweise mittels einer Schraube fixiert. Dies ermöglicht eine äußerst kostengünstige Fertigung der Ausleger, da diese beispielsweise in Form von Rohren mit rechteckigem Querschnitt gefertigt werden können. Die Ausleger können dann leicht in der gewünschten Länge von einem entsprechenden Stangenmaterial wie einem Rohr abgelängt werden. Die Verbindungsstücke sind passend zu der Innenkontur der Ausleger ausgebildet, so daß sie leicht in die offenen Enden der Ausleger einschiebbar sind, um eine formschlüssige Verbindung zwischen Ausleger und Verbindungsstück zu schaffen. Zur sicheren Fixierung der Verbindungsstücke in den Auslegern werden vorzugsweise Schrauben verwendet, welche durch entsprechende Bohrungen in den Auslegern in die Verbindungsstücke eingreifen.

Die Säule weist bevorzugt zumindest eine Befestigungsnut zur Aufnahme von Befestigungselementen auf. In die Nut können beispielsweise Klemmelemente, Muttern oder Leisten mit einer Vielzahl von Gewindebohrungen eingesetzt werden, um entsprechende Befestigungselemente zum Anbringen von Geräten oder anderen Einrichtungen an der Säule fixieren zu können. So können beispielsweise Böden an der Säule befestigt werden, auf die später Geräte gestellt werden können. Es ist auch möglich beispielsweise Schrank- oder Schubladenelemente an der der Befestigungsnut in der Säule zu befestigen.

Weiter bevorzugt ist die Säule als Hohlprofil mit zumindest einer offenen Längsseite ausgebildet, welche vorzugsweise durch Abdeckelemente zumindest teilweise verschließbar ist. So können in der Säule verschiedene Einrichtungen angeordnet und befestigt werden. Beispieslweise kann in das Hohlprofil ein Teleskopständer eingesetzt werden, welcher in Längsrichtung aus der Säule herausziehbar ist. In den Bereichen des Hohlprofils, die keinen Zugang von außen für die in dem Hohlprofil angeordneten Einrichtungen erfordern, kann die offene Längsseite durch Abdeckelemente verschlossen werden, so daß die Säule nach außen hin vollständig verschlossen ist, um ein Eindringen von Schmutz und eine eventuelle Beschädigung der im Inneren angeordneten Einrichtungen zu verhindern.

Das Innere des Hohlprofils ist bevorzugt zur Aufnahme einer Verkabelung und/oder zumindest einer Steckdosenleiste ausgebildet. Ein solches Hohlprofil ermöglicht in seinem Inneren eine gut geschützte Kabel- und Leitungsführung. So können beispielsweise elektrische Anschlußleitungen der an dem Geräteständer angeordneten elektrischen Geräte durch das Hohlprofil geführt werden. Auch ist die Anordnung von Steckdosenleisten möglich, welche zum Anschluß elektrischer Geräte in dem Geräteständer vorgesehen sind. Dabei werden die Steckdosenleisten so in dem Hohlraum der Säule angeordnet, daß ihre Steckdosen zu der offenen Seite des Hohlprofils gerichtet sind.

Vorteilhafterweise ist an der Basis und vorzugsweise in dem Knotenstück eine Zugentlastung für eine elektrische Anschlußleitung angeordnet. Dabei ist die Zugentlastung bevorzugt zentral in dem Knotenstück angeordnet, so daß eine elektrische Anschlußleitung, welche im Inneren der Säule geführt ist, von oben durch das Knotenstück hindurch geführt werden kann, so daß die Anschlußleitung an der Unterseite der Basis austritt. Dabei wird sie sicher in der Zugentlastung durch das Knotenstück geführt, so daß Beschädigungen der Anschlußleitung durch Bewegung von Anschlußleitung und Knotenstück zueinander verhindert werden können.

Die Zugentlastung weist zweckmäßigerweise eine Verdrehsicherung zur drehfesten Fixierung an dem Knotenstück auf. So können bei Bewegung des Geräteständers ein Verdrehen der Anschlußleitung und daraus möglicherweise resultierende Beschädigungen verhindert werden. Eine soche Verdrehsicherung kann beispieslweie durch eine nicht rotationssymmetrische Ausgestaltung der äußeren Kontur der Verdrehsicherung und der entsprechenden Aufnahmeöffnung in dem Knotenstück erreicht werden.

Ferner weist die Zugentlastung bevorzugt Rastmittel zur Befestigung an dem Knotenstück auf. Auf diese Weise kann eine sichere Befestigung der Zugentlastung an dem Knotenstück bewirkt werden. Gleichzeitig ist die Montage durch Verrasten äußerst einfach, ohne daß aufwendige Befestigungsvorgänge, wie beispielsweise Verschrauben erforderlich sind.

Die Erfindung wird nachfolgend anhand beiliegender Zeichnungen beispielhaft beschrieben. In den Zeichnungen zeigt:
- Fig. 1: eine perspektivische Ansicht zweier Ausführungsformen der Basis des Geräteständers gemäß der Erfindung,
- Fig. 2: perspektivische Ansichten dreier Ausführungsformen der Basis des Geräteständers, teilweise in Explosionsansicht,
- Fig. 3: eine Detailansicht des Knotenstückes,
- Fig. 4: Detailansichten des Verbindungsstückes,
- Fig. 5: eine Detailansicht der Verbindung des Knotenstückes mit dem Verbindungsstück,
- Fig. 6: eine Draufsicht eines Knotenstückes mit sechs angeordneten Verbindungsstücken und
- Fig. 7: verschiedene Ansichten einer Zugentlastung für eine elektrische Anschlußleitung zum Einsetzen in das Knotenstück.

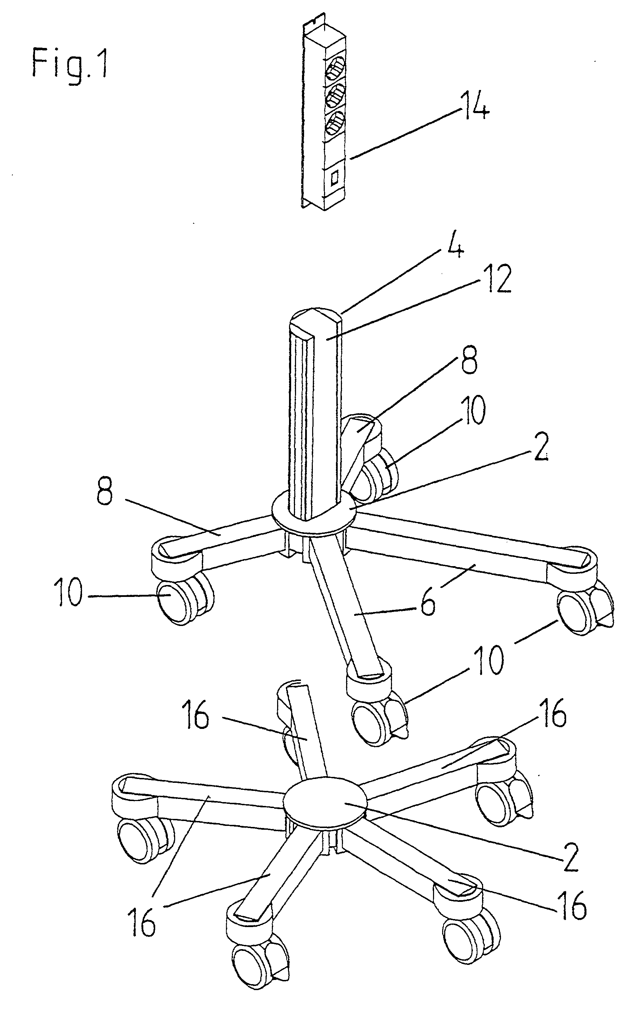

Figur 1 zeigt zwei perspektivische Ansichten zweier unterschiedlicher Anordnungen der Basis des erfindungsgemäßen Geräteständers. Oben in Figur 1 ist eine erste Ausführungsform der Basis des erfindungsgemäßen Geräteständers mit vier Auslegern gezeigt. Die Basis des Geräteständers weist als zentrales Bauteil ein Knotenstück 2 auf, an dessen Oberseite eine sich im wesentlichen vertikal erstreckende Säule 4 befestigt ist. Es ist hier nur der untere Abschnitt der Säule 4 gezeigt, d. h. etwaige Trageinrichtungen für Geräte oder Befestigungseinrichtungen an der Säule sind nicht gezeigt. Das Knotenstück 2 ist, wie später beschrieben, im wesentlichen kreisförmig ausgebildet. An dem Knotenstück 2 sind vier Ausleger 6, 8 angeordnet, welche sich im wesentlichen radial von dem Knotenstück 2 wegerstrecken. Dabei erstrecken sich die Ausleger 6, 8 im wesentlichen horizontal, d. h. quer zu der Säule 4. An ihren äußeren freien Enden weisen die Ausleger 6, 8 Rollen 10 auf, mittels derer der gesamte Geräteständer beweglich auf dem Boden steht. Der in Figur 1 oben gezeigte Geräteständer weist eine asymmetrische Basis auf, d.h. die Ausleger 6 sind länger ausgebildet als die Ausleger 8 und der Winkel zwischen den Auslegern 6 ist geringer als der Winkel zwischen den Auslegern 8 und die Winkel zwischen den Auslegern 6 und den Auslegern 8. Durch diese Ausgestaltung ist das Knotenstück 2 und somit auch die Säule 4 außerhalb der Mitte der Basis angeordnet. Dies ermöglicht, daß Geräte, die an der Säule 4 befestigt werden, so angeordnet werden können, daß sich deren Schwerpunkt in etwa im Mittelpunkt der Basis, d.h. über den Auslegern 6 befindet, so daß eine gute Standfestigkeit des gesamten Geräteständers erreicht wird. Die Säule 4 ist in der in Figur 1 gezeigten Form als Strangpreßprofil mit einem Hohlraum 12 ausgebildet, der zu einer Längsseite hin geöffnet ist. In diesen Hohlraum 12 der Säule 4 kann beispielsweise eine Steckdosenleiste 14, welche hier separat, d.h. vor der Montage gezeigt ist, eingesetzt werden.

Unten in Figur 1 ist eine zweite mögliche Ausgestaltung der Basis des erfindungsgemäßen Geräteständers gezeigt. Bei dieser Ausgestaltung sind an dem Knotenstück 2, welches identisch zu dem zuvor beschriebenen Knotenstück 2 ist, fünf Ausleger 16 angeordnet, welche an ihren freien Enden Rollen aufweisen. Bei dieser Anordnung sind die Ausleger 16 sämtlich gleich lang ausgebildet und in regelmäßigen Abständen an dem Umfang des Knotenstückes 2 angeordnet, so daß eine symmetrische Basis für einen Geräteständer entsteht. Die Säule des Geräteständers ist hier wie auch in den nachfolgenden Figuren nicht gezeigt.

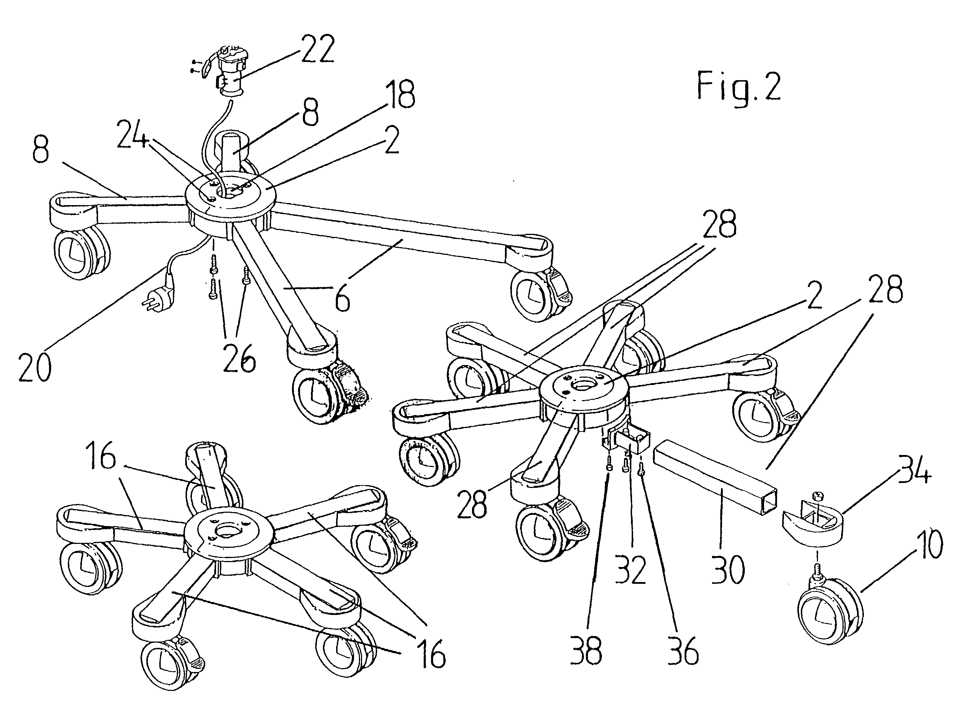

Figur 2 zeigt perspektivische Ansichten dreier möglicher Kombinationen der Basis des erfindungsgemäßen Geräteständers. Oben links in Figur 2 ist nochmals die erste anhand von Figur 1 gezeigte Ausführungsform dargestellt. Hier sind an der Basis 2 vier Ausleger 6, 8 angeordnet, wobei die Ausleger 6 länger als die Ausleger 8 sind. Das Knotenstück 2 weist in seiner Mitte eine zentrale Öffnung 18 auf, durch die eine elektrische Anschlußleitung 20 geführt ist. Dazu wird in die Öffnung 18 eine Zugentlastung 22 eingesetzt (hier vor der Montage gezeigt), welche eine sichere Führung der Anschlußleitung 20 ermöglicht. Ferner sind in dem Knotenstück 2 drei Löcher 24 im Umkreis der zentralen Öffnung 18 ausgebildet, durch die Schrauben 26 zum Befestigen der hier nicht gezeigten Säule gesteckt werden. Unten links in Figur 2 ist nochmals die bereits anhand von Figur 1 erläuterte Ausführungsform mit fünf Auslegern 16 gezeigt. Rechts in Figur 2 ist eine dritte mögliche Kombination gezeigt, bei welcher an dem Knotenstück 2, welches identisch zu den zuvor gezeigte Knotenstücken 2 ist, sechs Ausleger 28 angeordnet sind. Die Ausleger 28 weisen sämtlich dieselbe Länge auf und sind in gleichen Winkeln, gleichmäßig voneinander beabstandet entlang dem Umfang des Knotenstückes 2 angeordnet, so daß auch diese Basis symmetrisch ausgebildet ist. Die Ausleger 28 setzen sich aus einem Rohr 30 mit quadratischem Querschnitt, einem Verbindungsstück 32, einer Rollenaufnahme 34 sowie einer Rolle 10 zusammen. Das Rohr 30 ist von einem entsprechenden Stangen- bzw. Rohrmaterial in der gewünschten Länge abgeschnitten worden. In das eine offene Ende des Rohres 30 wird ein Verbindungsstück 32 eingesetzt, welches die Verbindung zu dem Knotenstück 2 herstellt. Dabei wird das Verbindungsstück 32 durch Schrauben 36 mit dem Rohr 30 verbunden und mit Schrauben 38 an dem Knotenstück 2 befestigt. An dem anderen freien Ende des Rohres 30 ist ein Rollenträger 34 befestigt, an dem mittels einer Schraube eine Rolle 10 angebracht ist. Wie in Figur 2 zu erkennen ist, ermöglicht die vorliegende Erfindung die Ausgestaltung der Basis in verschiedenen Konfigurationen mit ein und demselben Knotenstück 2, an das lediglich je nach Bedarf eine unterschiedliche Anzahl von Auslegern 6, 8, 16, 28 in verschiedenen Positionen angebracht wird. Zusätzlich kann sehr leicht die Länge der Ausleger 6, 8, 16, 28 variiert werden, indem das Rohr 30 in gewünschter Länge von einem Stangenmaterial abgelängt wird. Die Verbindungsstücke 32, die Rollenträger 34 und die Rollen 10 sind wie auch das Knotenstück 2 bei jeder Konfiguration der Basis identisch.

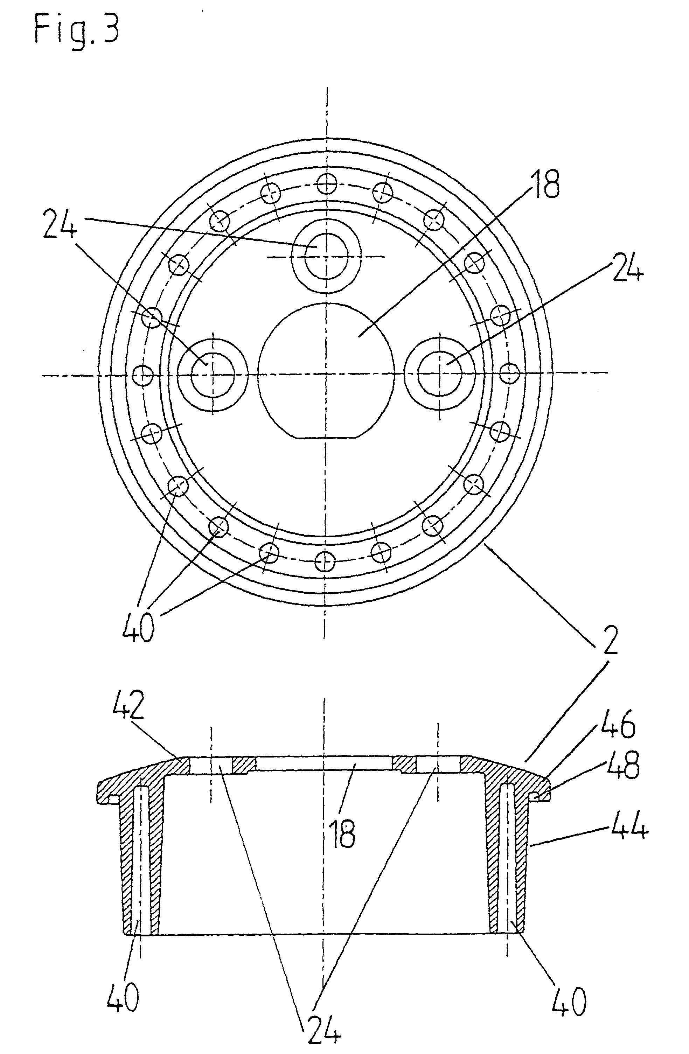

Figur 3 zeigt eine Detailansicht des Knotenstückes 2. Oben in Figur 3 ist eine Draufsicht des Knotenstückes 2 von unten gezeigt, während unten in Figur 3 eine Schnittansicht entlang der Mittellinie des Knotenstückes 2 gezeigt ist. In der Mitte des Knotenstückes 2 ist die Öffnung 18 zur Durchführung von Kabeln bzw. Anschlußleitungen ausgebildet. Im Umkreis der Öffnung 18 sind die drei Löcher 24 zur Befestigung der Säule 4 angeordnet. Entlang des äußeren Umfanges des Knotenstückes 2 sind in dieser Ausführungsform zwanzig Bohrungen 40 ausgebildet, welche zur Positionierung und Befestigung der Ausleger 6, 8, 16, 28 über die Verbindungsstücke 32 und die Schrauben 38 dienen. Dabei sind die Bohrungen 40 regelmäßig beabstandet zueinander angeordnet. Auf diese Weise bilden sie eine Vielzahl von Positionierungsmöglichkeiten für die Verbindungsstücke 32 und die Ausleger 6, 8, 16, 28.

Insgesamt ist das Knotenstück 2 im wesentlichen topfförmig ausgebildet. Es besteht aus einer im wesentlichen kreisförmigen Scheibe 42, entlang deren Umfang sich ein Rand 44 rechtwinklig wegerstreckt, in dem die Bohrungen 40 angeordnet sind. Dabei sind die Bohrungen 40 von der Unterseite des Knotenstückes her in Form von Sacklöchern eingebracht, so daß sie an dem montierten Geräteständer nicht zu erkennen sind. Im Bereich des Umfanges der Scheibe 42, d.h. am oberen Ende des Randes 44 ist ein umlaufender hakenförmiger Vorsprung 46 ausgebildet, welcher eine nach unten geöffnete Nut 48 bildet, in die, wie später erläutert, die Verbindungsstücke 32 eingreifen können. Das gesamte Knotenstück 2 ist einstückig als Druckgußteil aus Aluminium ausgebildet. Dabei können die Öffnung 18, die Löcher 24 und die Bohrungen 40 gleich beim Gießen ausgebildet werden, so daß eine spanende Nachbearbeitung im wesentlicehn nicht erforderlich ist.

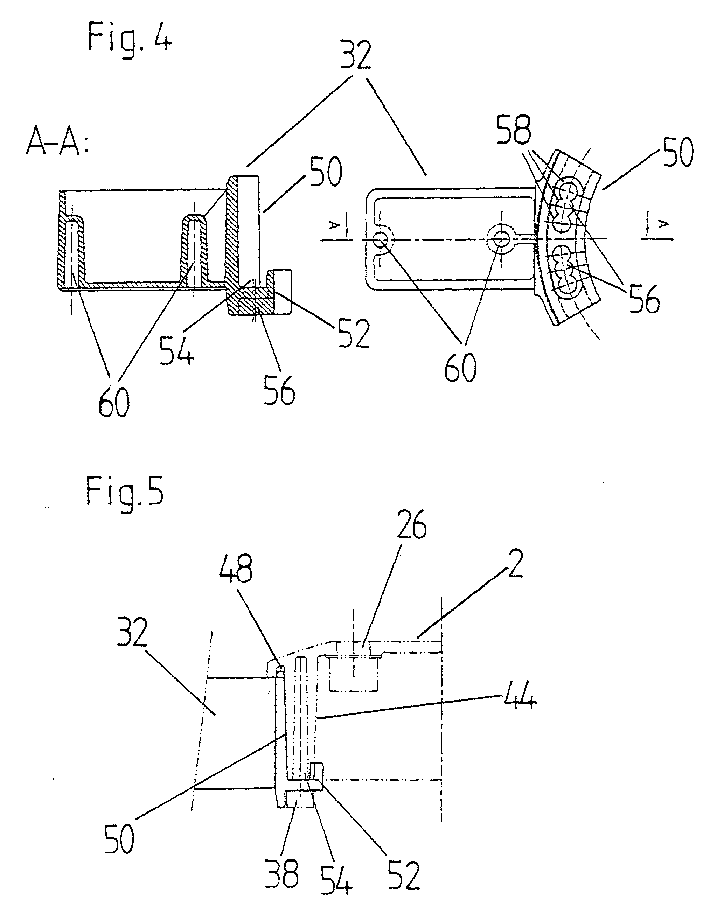

Figur 4 zeigt eine Detailansicht eines Verbindungsstückes 32, wobei links in Fig. 5 eine Schnittansicht und rechts eine Draufsicht von unten dargestellt ist. Das Verbindungsstück 32 ist als Druckgußteil ausgebildet. An seiner Seite 50, welche später im montierten Zustand dem Knotenstück 2 zugewandt ist, ist das Verbindungsstück 32 entsprechend der Außenkontur, d.h. mit demselben Radius wie das Knotenstück 2 ausgebildet. An seiner unteren Kante weist das Verbindungsstück 32 an der Seite 50 einen hakenförmigen Vorsprung 52 auf, der eine Eingriffsnut 54, welche nach oben geöffnet ist, ausbildet. In dem Vorsprung 52 sind ferner Löcher 56 ausgebildet, welche zur Positionierung und zur Befestigung des Verbindungsstückes 32 an dem Knotenstück 2 dienen. Die Löcher 56 sind, wie rechts in Figur 4 zu erkennen ist, aus jeweils drei einander teilweise überlappenden kreisförmigen Löchern bzw. Lochabschnitten 58 gebildet. Auf diese Weise erhalten die Löcher 56 die Form von Langlöchern, welche Längsseiten mit mehreren Kreisbögen aufweisen. Auf diese Weise bieten die Löcher 56 jeweils drei Möglichkeiten, einen Bolzen bzw. eine Schraube in den Löchern 56 zu positionieren, nämlich in einem der kreisförmigen Lochabschnitte 58. Auf diese Weise ergibt sich eine sehr feine Abstufung der Positionierungsmöglichkeiten für das Verbindungsstück 32 an dem Knotenstück 2. Zusätzlich sind in dem Verbindungsstück 32 in Richtung seiner Längsachse zwei Sacklöcher 60 ausgebildet, in welche Schrauben zur Befestigung des Verbindungsstückes 32 in dem Rohr 30 eines Auslegers eingreifen können.

Figur 5 zeigt in einer schematischen Schnittansicht, die Befestigung eines Verbindungsstückes 32 an dem Knotenstück 2. Das Verbindungsstück 32 ist so an den äußeren Umfang des Knotenstückes 2 angesetzt, daß seine Seite 50 mit dem äußeren Umfang des Knotenstückes 2 zur Anlage kommt. Gleichzeitig greift das Knotenstück 32 mit seiner oberen Kante der Seite 50 in die Nut 48 an dem Knotenstück 2 ein. Das Verbindungsstück 32 umgreift mit seinem Vorsprung 52 die untere Umfangskante des Randes 44 des Knotenstückes 2, so daß deren freies Ende in der Eingriffsnut 54 liegt. Auf diese Weise wird eine sichere formschlüssige Verbindung zwischen Verbindungsstück 32 und Knotenstück 2 geschaffen, welche durch die Schraube 38 gesichert wird. Gleichzeitig sorgt die Schraube 38 für eine exakte Winkelpositionierung des Verbindungsstückes 32 an dem Knotenstück 2 in Umfangsrichtung, indem die Schraube 38 in eine bestimmte der Bohrungen 40 und in einen bestimmten Lochabschnitt 58 der Löcher 56 eingesetzt wird. Ferner ist in Figur 5 eine der Schrauben 26 zur Befestigung der hier nicht gezeigten Säule dargestellt.

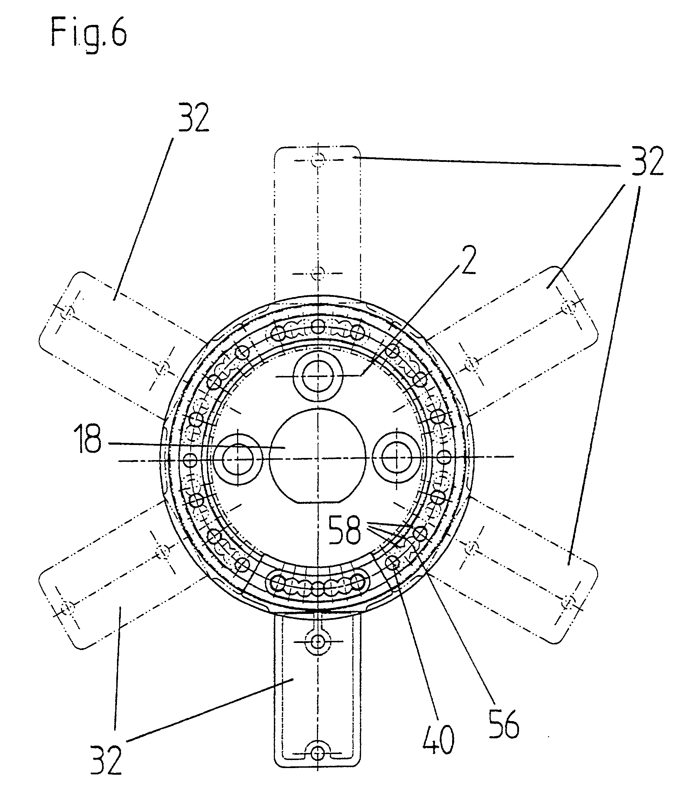

Figur 6 zeigt eine Draufsicht auf ein Knotenstück 2 mit sechs angesetzten Verbindungsstücken 32 für eine Basis, wie sie in Figur 2 rechts gezeigt ist. Die sechs Verbindungsstücke 32 sind in regelmäßigen Wickelabständen entlang dem Umfang des Knotenstückes 2 angeordnet. Dabei sind die Verbindungsstücke 32 in vorbestimmten Positionen an dem Knotenstück 2 positioniert, welche durch die Bohrungen 40 und die Löcher 56 in dem Knotenstück 2 bzw. in den Verbindungsstücken 32 vorgegeben werden. Dabei kommt in jedem Loch 56 einer der kreisförmigen Lochabschnitte 58 mit einer der Bohrungen 40 in dem Knotenstück 2 zur Deckung, so daß eine Schraube zur Positionierung und Befestigung durch das Loch 56 in die Bohrung 40 eingesetzt werden kann. Durch das Zusammenwirken der kreisförmigen Lochabschnitte 58 in dem Löchern 56 und der Bohrungen 40 ist eine sehr feine Abstufung der einzelnen vorgegebenen Positionen für die Verbindungsstücke 32 an dem Knotenstück 2 möglich, so daß mit dem Knotenstück 2 und einer unterschiedlichen Anzahl von gleichen Verbindungsstücken 32 eine Vielzahl von möglichen, definierten Anordnungen zum Bilden einer Basis für den Geräteständer ermöglicht wird. Ferner ist eine solche Basis einfach zu montieren, da sämtliche Befestigungspositionen vorgegeben sind und keinerlei aufwendige Schweißoperationen erforderlich sind.

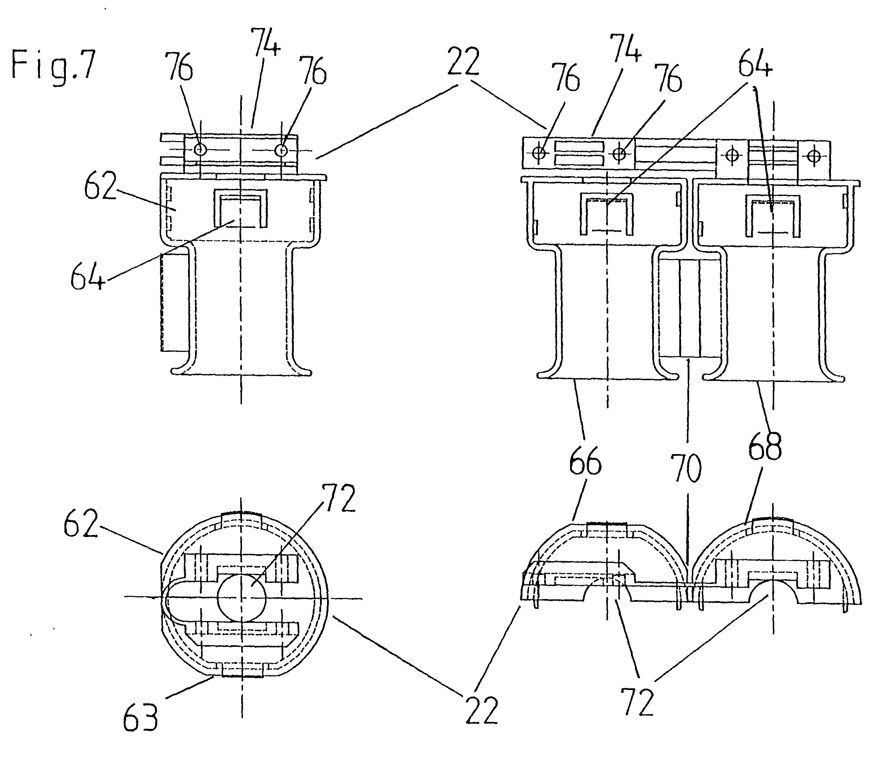

Figur 7 zeigt Detailansichten der Zugentlastung 22 für eine elektrische Anschlußleitung. Die Zugentlastung 22 wird in der Öffnung 18 in dem Knotenstück 2 (siehe Figuren 2, 3 und 6) angeordnet, um eine sichere Führung für eine elektrische Anschlußleitung, welche durch die Öffnung 18 in die Säule 4 (siehe Fig. 1) geführt wird, zu bilden, so daß eine mögliche Beschädigung der elektrischen Anschlußleitung auch bei einer Bewegung des Geräteständers verhindert werden kann. Die Zugentlastung 22 weist einen Abschnitt 62 auf, der eine Umfangskontur hat, welche der Kontur der Öffnung 18 entspricht. Die Umfangskontur von Zugentlastung 22 und Öffnung 18 ist nicht rotationssymmetrisch ausgestaltet, d.h. sie weist eine Abflachung 63 auf. Auf diese Weise wird eine Verdrehsicherung der Zugentlastung 22 in der Öffnung 18 geschaffen, die verhindert, daß sich die Zugentlastung 22 und damit eine in dieser geführte Anschlußleitung verdrehen kann. Auf diese Weise können durch Verdrehen verursachte Beschädigungen der Anschlußleitung verhindert werden. Zusätzlich sind im Bereich des Abschnittes 62 Rastnasen 64 angeordnet, mittels derer die Zugentlastung 22 in der Öffnung 18 in dem Knotenstück 2 verrastet werden kann. Die Zugentlastung 22 ist vorzugsweise aus Kunststoff hergestellt und besteht aus zwei Hälften 66, 68, welche an einer ihrer Längsseiten 70 miteinander verbunden sind. Zur Montage werden die beiden Hälften 66, 68 um ihre Längsseite 70 zusammengeklappt, um so die Zugentlastung 22 zu bilden. Im Inneren der Zugentlastung 22 ist eine Öffnung 72 ausgebildet, in die ein Kabel bzw. eine elektrische Anschlußleitung eingelegt wird. Dabei ist in jeder der Hälften 66, 68 eine Hälfte der Öffnung 72 ausgebildet, so daß eine Anschlußleitung zunächst in eine der Hälften der Öffnung 72 eingelegt werden kann, bevor die Hälften 66, 68 zusammengeklappt werden, wobei die Anschlußleitung dann in der Öffnung 72 eingeschlossen wird. Ferner ist am oberen Ende der Zugentlastung 22 eine Klemme 74 ausgebildet, in der die Anschlußleitung sicher gehalten werden kann. Auch die Klemme 74 besteht aus zwei Hälften, die beim Zusammenklappen der beiden Hälften 66, 68 der Zugentlastung 22 aufeinander zu liegen kommen. Die Klemme 74 wird dann mittels Schrauben, welche in die Löcher 76 eingesetzt werden können, verschraubt bzw. geklemmt, um so die Anschlußleitung sicher zu klemmen.

### Liste der Bezugsziffern:

- 2: Knotenstück
- 4: Säule
- 6: Ausleger
- 8: Ausleger
- 10: Rolle
- 12: Hohlraum
- 14: Steckdosenleiste
- 16: Ausleger
- 18: Öffnung
- 20: Anschlußkabel
- 22: Zugentlastung
- 24: Loch
- 26: Schraube
- 28: Ausleger
- 30: Rohr
- 32: Verbindungsstück
- 34: Rollenträger
- 36: Schraube
- 38: Schraube
- 40: Bohrung
- 42: Scheibe
- 44: Rand
- 46: Vorsprung
- 48: Nut
- 50: Seite
- 52: Vorsprung
- 54: Eingriffsnut
- 56: Loch
- 58: Lochabschnitt
- 60: Sackloch
- 62: Abschnitt
- 63: Abflachung
- 64: Rastnase
- 66, 68: Hälften der Zugentlastung
- 70: Längsseite
- 72: Öffnung
- 74: Klemme
- 76: Loch

## Patentansprüche

1. Geräteständer mit zumindest einer Säule (4) zum Tragen verschiedenster Einrichtungen und einer Basis, welche
zumindest ein Knotenstück (2), von dem sich die Säule (4) wegerstreckt und welches im Bereich seines gesamten äußeren Umfanges in regelmäßigen Abständen mit Bohrungen (40) versehen ist, und
mehrere Ausleger (6, 8; 16; 28) aufweist, welche
sich von dem Knotenstück (2) wegerstrecken und
an ihren dem Knotenstück (2) zugewandten Enden jeweils mehrere Löcher (56) aufweisen, die so angeordnet sind, daß zumindest eines der Löcher (56) mit einer beliebigen Bohrung der Bohrungen (40) in dem Knotenstück (2) fluchtend positionierbar ist, so daß ein Fixierungselement (38) durch das Loch (56) in die Bohrung (40) einsetzbar ist, während
die dem Knotenstück (2) abgewandten Enden der Ausleger (6, 8; 16; 28) Füße oder Rollen (10) aufweisen oder mit einem weiteren Knotenstück (2) verbunden sind, **dadurch gekennzeichnet, daß** die Löcher (56) in den Auslegern (6, 8; 16; 28) jeweils in Gestalt einander teilweise überlappender Kreise (58) ausgebildet sind, wobei jeweils zumindest einer der Kreise (58) zu einer betiebigen Bohrung der Bohrungen (40) in dem Knotenstück (2) fluchtend positionierbar ist.

2. Geräteständer nach Anspruch 1, bei welchem mehrere der in einem Ausleger (6, 8; 16; 28) ausgebildeten Löcher (56) gleichzeitig zu Bohrungen (40) in dem Knotenstück (2) fluchtend positionierbar sind.

3. Geräteständer nach einem der vorangehenden Ansprüche, bei welchem in Winkelschritten zwischen 2° und 15°, bevorzugt zwischen 4° und 8° und besonders bevorzugt in Winkelschritten von 6° entlang des Umfangs des Knotenstückes (2) zumindest eines der Löcher (56) zu einer der Bohrungen (40) fluchtend positionierbar ist.

4. Geräteständer nach einem der vorangehenden Ansprüche, bei welchem die Ausleger (6, 8; 16; 28) jeweils an ihren dem Knotenstück (2) zugewandten Enden zumindest einen Vorsprung zum Eingriff in eine korrespondierende Nut (48) an dem Knotenstück (2) und/oder zumindest eine Nut (54) zum Umgreifen eines Teils (44) des Knotenstückes (2) aufweisen.

5. Geräteständer nach einem der vorangehenden Ansprüche, bei welchem die dem Knotenstück (2) zugewandten Enden der Ausleger (6, 8; 16; 28) als separate Verbindungsstücke (32) ausgebildet sind, welche mit den Auslegern (6, 8; 16; 28) verbunden sind.

6. Geräteständer nach Anspruch 5, bei welchem die Ausleger (6, 8; 16; 28) hohl ausgebildet sind und die Verbindungsstücke (32) jeweils von einer Stirnseite in den Ausleger (6, 8; 16; 28) eingeschoben und dort vorzugsweise mittels einer Schraube (36) fixiert sind.

7. Geräteständer nach einem der vorangehenden Ansprüche, bei welchem die Säule (4) als Hohlprofil mit zumindest einer offenen Längsseite (12) ausgebildet ist, welche vorzugsweise durch Abdeckelemente zumindest teilweise verschließbar ist, wobei das Innere des Hohlprofils vorzugsweise zur Aufnahme einer Verkabelung und/oder zumindest einer Steckdosenleiste (14) ausgebildet ist.

8. Geräteständer nach einem der vorangehenden Ansprüche, bei welchem an der Basis und vorzugsweise in dem Knotenstück (2) eine Zugentlastung (22) für eine elektrische Anschlußleitung (20) angeordnet ist, wobei die Zugentlastung (22) vorzugsweise eine Verdrehsicherung zur drehfesten Fixierung an dem Knotenstück (2) aufweist.

9. Geräteständer nach Anspruch 8, bei welcher die Zugentlastung (22) Rastmittel (64) zur Befestigung an dem Knotenstück (2) aufweist.

## Claims

1. Equipment stand having at least one column (4), for carrying a variety of different devices, and a base, which
has at least one joint component (2), from which the column (4) extends away and which is provided with bores (40) at regular intervals over its entire outer circumference, and
a plurality of extension arms (6, 8; 16; 28), which
extend away from the joint component (2) and,
at their ends which are directed towards the joint component (2), each have a plurality of holes (56) which are arranged such that at least one of the holes (56) can be positioned in alignment with any desired bore of the bores (40) in the joint component (2), with the result that a fixing element (38) can be inserted through the hole (56) into the bore (40) while
those ends of the extension arms (6, 8; 16; 28) which are directed away from the joint component (2) have feet or rollers (10) or are connected to a further joint component (2), **characterized in that** the holes (56) in the extension arms (6, 8; 16; 28) are each designed in the form of circles (58) which partially overlap one another, it being possible for in each case at least one of the circles (58) to be positioned in alignment with any desired bore of the bores (40) in the joint component (2).

2. Equipment stand according to Claim 1, in the case of which a plurality of the holes (56) formed in an extension arm (6, 8; 16; 28) can be simultaneously positioned in alignment with bores (40) in the joint component (2).

3. Equipment stand according to one of the preceding claims, in the case of which, in angle steps of between 2° and 15°, preferably between 4° and 8° and particularly preferably in angle steps of 6° along the circumference of the joint component (2), at least one of the holes (56) can be positioned in alignment with one of the bores (40).

4. Equipment stand according to one of the preceding claims, in the case of which the extension arms (6, 8; 16; 28), at their ends which are directed towards the joint component (2) in each case, have at least one protrusion for engaging in a corresponding groove (48) on the joint component (2) and/or have at least one groove (54) for engaging around part (44) of the joint component (2).

5. Equipment stand according to one of the preceding claims, in the case of which those ends of the extension arms (6, 8; 16; 28) which are directed towards the joint component (2) are designed as separate connecting components (32) which are connected to the extension arms (6, 8; 16; 28).

6. Equipment stand according to Claim 5, in the case of which the extension arms (6, 8; 16; 28) are of hollow design and the connecting components (32) are pushed into the extension arm (6, 8; 16; 28) from one end side in each case and are fixed there preferably by means of a screw (36).

7. Equipment stand according to one of the preceding claims, in the case of which the column (4) is designed as a hollow profile with at least one open longitudinal side (12) which can be closed, at least in part, preferably by covering elements, the interior of the hollow profile preferably being designed for accommodating cabling and/or at least one multiple circuit outlet (14).

8. Equipment stand according to one of the preceding claims, in the case of which a strain-relief device (22) for an electric connecting lead (20) is arranged on the base and preferably in the joint component (2), the strain-relief device (22) preferably having a rotation-prevention means for rotationally fixed attachment to the joint component (2).

9. Equipment stand according to Claim 8, in the case of which the strain-relief device (22) has latching means (64) for fastening on the joint component (2).

## Revendications

1. Support pour appareils avec au moins une colonne (4) pour porter différents dispositifs et une base, laquelle
présente au moins un gousset d'assemblage (2) à partir duquel s'étend la colonne (4) et qui est équipé sur tout le pourtour extérieur à intervalles réguliers de forages (40), et plusieurs bras (6, 8 ; 16 ; 28),
lesquels s'étendent à partir du gousset d'assemblage (2) et qui présentent chacun à leur extrémité tournée vers le gousset d'assemblage (2) plusieurs orifices (56),
qui sont disposés de manière à ce qu'au moins un des orifices (56) puisse être positionné en alignement précis avec n'importe quel forage parmi les forages (40) dans le gousset d'assemblage (2) de telle sorte qu'un élément de fixation (38) puisse être inséré à travers l'orifice (56) dans le forage (40) pendant que
les extrémités des bras (6, 8 ; 16 ; 28) opposées au gousset d'assemblage (2) présentent des pieds ou des roulettes (10) ou sont reliées à un autre gousset d'assemblage (2), **caractérisé en ce que** les orifices (56) dans les bras (6, 8 ; 16 ; 28) sont conçus respectivement sous forme de cercles se chevauchant partiellement (58), moyennant quoi au moins un des cercles (58) peut respectivement être positionné en alignement précis par rapport à n'importe quel forage parmi les forages (40) dans le gousset d'assemblage (2).

2. Support pour appareils selon la revendication 1, dans lequel plusieurs des orifices (56) conçus dans les bras (6, 8 ; 16 ; 28) peuvent être positionnés en alignement précis en même temps par rapport aux forages (40) dans le gousset d'assemblage (2).

3. Support pour appareils selon l'une quelconque des revendications précédentes, dans lequel au moins un des orifices (56) peut être positionné en alignement précis par rapport à l'un des forages (40) dans des rapports d'angle situés entre 2° et 15°, de préférence entre 4° et 8° et en particulier de préférence dans des rapports d'angle de 6° le long du pourtour du gousset d'assemblage (2).

4. Support pour appareils selon l'une quelconque des revendications précédentes, dans lequel les bras (6, 8 ; 16 ; 28) présentent respectivement à leur extrémité tournée vers le gousset d'assemblage (2) au moins une avancée pour la pénétration dans un écrou correspondant (48) sur le gousset d'assemblage (2) et/ou au moins un écrou (54) pour envelopper une pièce (44) du gousset d'assemblage (2).

5. Support pour appareils selon l'une quelconque des revendications précédentes, dans lequel les extrémités des bras (6, 8 ; 16 ; 28) tournées vers le gousset d'assemblage (2) sont conçues comme des parties d'assemblage (32) séparées, qui sont reliées aux bras (6, 8 ; 16 ; 28).

6. Support pour appareils selon la revendication 5, dans lequel les bras (6, 8 ; 16 ; 28) sont conçus de façon creuse et les pièces de fixation (32) sont introduites respectivement à partir d'une face frontale dans le bras (6, 8 ; 16 ; 28) et y sont fixées de préférence au moyen d'une vis (36).

7. Support pour appareils selon l'une quelconque des revendications précédentes, dans lequel la colonne (4) est conçue comme profilé creux avec au moins une face longitudinale ouverte (12), laquelle peut être en partie fermée de préférence par des éléments de recouvrement, moyennant quoi l'intérieur du profilé creux est conçu de préférence pour loger un câble et/ou au moins un bloc multiprises (14).

8. Support pour appareils selon l'une quelconque des revendications précédentes, dans lequel sur la base et de préférence dans le gousset d'assemblage (2) est placée une décharge de traction (22) pour une conduite électrique de raccordement (20), moyennant quoi la décharge de traction (22) présente de préférence une sécurité contre la torsion pour une fixation résistante à la torsion sur le gousset d'assemblage (2).

9. Support pour appareils selon la revendication 8, dans lequel la décharge de traction (22) présente des moyens d'encliquetage (64) pour la fixation sur le gousset d'assemblage (2).
